# EUROPÄISCHE PATENTSCHRIFT

(11) **EP 3 571 168 B1**
(45) Veröffentlichungstag und Bekanntmachung des Hinweises auf die Patenterteilung: **06.01.2021**
(21) Anmeldenummer: 18700428.8
(22) Anmeldetag: 18.01.2018
(51) Int. Cl.: C02F 1/66, C01B 7/01, C02F 101/12

(54) **VERFAHREN ZUR KONTINUIERLICHEN SALZSÄURENEUTRALISATION**
METHOD FOR CONTINUOUS HYDROCHLORIC ACID NEUTRALIZATION
PROCÉDÉ DE NEUTRALISATION D'ACIDE CHLORHYDRIQUE EN CONTINU

(30) Priorität: 20.01.2017 EP 17152418
(43) Veröffentlichungstag der Anmeldung: 27.11.2019
(73) Patentinhaber: Covestro Intellectual Property GmbH & Co. KG, 51373 Leverkusen (DE)
(72) Erfinder: BRACHMANN, Andreas, 41542 Dormagen (DE); FREITAG, Thomas, 41539 Dormagen (DE); HECKE, Juergen, 51399 Burscheid (DE); HIRSCHBERG, Axel, 51065 Köln (DE); KERN, Wolfgang, 47447 Moers (DE); LEIPNITZ, Martin, 04416 Markkleeberg (DE); FRIEDRICHSEN, Ralf, 51061 Köln (DE); ROSSMANN, Volker, 51371 Leverkusen (DE)
(74) Vertreter: Levpat
(86) Internationale Anmeldenummer: PCT/EP2018/051146
(87) Internationale Veröffentlichungsnummer: WO 2018/134277

(56) Entgegenhaltungen:
- WO-A1-2008/083997
- AT-B- 234 639
- US-A- 5 015 457

## Beschreibung

Die Erfindung betrifft ein Verfahren und zur kontinuierlichen Neutralisation von Salzsäure im industriellen Maßstab sowie eine Vorrichtung hierzu.

Die Erfindung geht aus von an sich bekannten industriellen Prozessen zur Neutralisation von Salzsäure, die als Reaktionsnebenprodukt bei der Herstellung von Kunststoff oder Kunststoffvorprodukten entsteht.

Die chemischen Grundlagen der Neutralisation sind in der Literatur umfangreich beschrieben. Gemäß dem Arrhenius-Konzept (1887) und deren Erweiterung durch Bronsted-Lowry (1923) handelt es sich bei der Neutralisation um die Reaktion zwischen einer Säure und einer Base. Dabei definiert sich eine Säure als eine Substanz, die unter Bildung von Hydronium-Ionen bzw. Oxonium-Ionen (H₃O⁺) in wässriger Lösung dissoziieren und Protonen abgeben kann. Im Gegensatz dazu beschreibt eine Base eine Substanz, die bei der Dissoziation in wässriger Lösung Hydroxid-Ionen (OH⁻) bildet und Protonen aufnehmen kann (vgl. MORTIMER, Charles E.; MÜLLER, Ulrich: Chemie - Das Basiswissen der Chemie. 8. Auflage, 2001, S. 234 und 282).

In dem beschriebenen Zusammenhang ist für den Laborbetrieb das diskontinuierlich Verfahren der Titration zur Ermittlung eines Graphs zur Darstellung des pH-Wertes bekannt. Dabei werden zu einer definierten Menge einer Säure schrittweise Kleinstmengen der Base zugeführt und der pH-Wert über einen Indikator bestimmt (vgl. MORTIMER, Charles E.; MÜLLER, Ulrich: Chemie - Das Basiswissen der Chemie. 8. Auflage, 2001, S. 311 f.).

Aus der WO2008083997A1 ist ein kontinuierliches Verfahren zur Neutralisation einer Salzsäurehaltigen Reaktionsmischung im Anschluss an die Produktion von Diphenylmethandiamin (MDA) bekannt geworden, bei dem die Neutralisation der Säure mit Ammoniak erfolgt und anschließend eine Trennung des Reaktionsgemisches in wässrige und organische Phase erfolgt. Dabei ist über einen weiteren Verfahrensschritt die Abtrennung des Ammoniaks aus der wässrigen Phase mittels eines Oxid oder Hydroxid eines Erdalkalimetalls möglich. Als wesentliche Unterschiede zum Verfahren der vorliegenden Erfindung kann herausgestellt werden, dass bei dem Verfahren WO2008083997A1 die schwache Base Ammoniak (pH-Wert von 9,4) als Neutralisationsmittel zu einer sauren Reaktionsmischung nach erfolgter MDA Reaktion zugegeben wird und nach der Neutralisationsreaktion eine Trennung der organischen von der wässrigen Phase erfolgt, um beide Phasen separat aufzuarbeiten bzw. einen Teil der eingesetzten Ammoniakmenge mittels Reaktion mit Kalkmilch und anschließender Destillation zurückzugewinnen.

Eine weitere verfahrenstechnische Anwendung der Neutralisation im industriellen Maßstab findet beispielweise in der Aufbereitung von kommunalen oder prozesstechnischen Abwässern, die bevorzugt als saure Mischabwässer anfallen, statt. Vor der Einleitung der gereinigten Abwässer in den Vorfluter wird ein pH-neutraler Zustand (pH 7) angestrebt, der mittels Zugabe starker Säuren und Basen (meist Schwefelsäure und Natronlauge oder alternativ Kalkmilch) zwischen Rechenanlage und der Vorklärung erreicht wird. Zusätzlich dient die Zugabe dieser Substanzen der Fällung von Metall-Ionen durch die Bildung von Metallhydroxiden. Dieser Vorgang wird als Neutralisationsfällung bezeichnet und findet in der Regel in Durchlaufbehandlungsanlagen statt. Dabei werden mittlere Verweilzeiten von 15 Minuten bei einem mittleren Durchsatz von 10 m³/h angestrebt und die Durchmischung erfolgt mittels langsam laufender Mischorgane. Jedoch steht der Fokus hierbei auf dem Trennen von Metallhydroxiden durch Sinkprozesse, sodass nachgeschaltete Abscheidungsprozesse erforderlich sind (vgl. HARTINGER, Ludwig: Handbuch der Abwasser- und Recyclingtechnik. 2. Auflage, 1991, S. 294 ff.).

Grundsätze der Prozessauslegung und Regelungstechnik sind in der Literatur zugänglich (vgl. LIPTAK, Bela G.: Instrument Engineers Handbook. 4. Auflage, 2005, S. 2044 ff.). Zu der konkreten Aufgabenstellung liest man hieraus jedoch nichts.

Keine der bekannten technischen Anwendungen fokussiert sich auf die Neutralisation der starken Säure Salzsäure mit der starken Base Natronlauge und die dabei entstehenden verfahrens- und regelungstechnischen Herausforderungen der pH-Wert Einstellung bei hohen Stoffmengen (insbesondere einem Volumenstrom der Salzsäure von mindestens 1 m³/h) insbesondere bei variabler Salzsäureeingangskonzentration und variablem Salzsäureeingangsstrom sowie insbesondere auch bei der Abführung der Reaktionswärme bei einer kontinuierlichen und vollautomatisierten Betriebsweise.

Die bei der Isocyanat-Herstellung (MDI oder TDI) als Koppelprodukt anfallenden Salzsäuremengen können in einer Elektrolyse weiterverarbeitet werden oder über Verladevorrichtungen zur weiteren Nutzung in der Stahl- oder Kautschukindustrie sowie dem Segment der Wasseraufbereitung versandt werden. Aufgrund limitierter Kapazitäten zur Zwischenlagerung kann es im Fall von geringer Abnahme der genannten Salzsäuresenken (absatzschwachen Zeiten von Salzsäure) zu Überkapazitäten an anfallender Säure kommen, die nicht weiterverarbeitet werden können. Da es in diesem Zusammenhang wirtschaftlich nicht sinnvoll ist, die Herstellung an Isocyanat zu reduzieren, kommt die beschriebene Erfindung zum Einsatz. Mit der Neutralisationsanlage kann im Bedarfsfall ein Teil der bei der Isocyanat-Herstellung (MDI oder TDI) als Koppelprodukt anfallenden Salzsäuremengen verarbeitet werden ohne eine Reduktion der Isocyanat-Produktion zu generieren.

Die Aufgabe der vorliegenden Erfindung besteht darin, ein neues kontinuierliches Neutralisationsverfahren für Salzsäure hoher Konzentration bereitzustellen, dass die vorstehenden Nachteile überwindet und eine betriebssichere, ökonomische, kontinuierliche Prozessführung ermöglicht.

Spezielle Aufgabe der Erfindung ist es ein kontinuierliches Neutralisationsverfahrens bereitzustellen, das im industriellen Maßstab den variablen Betriebsanforderungen bezüglich Eingangskonzentration und -menge der Salzsäure in einem kontinuierlich arbeitenden und vollautomatisierten Neutralisationsprozess mit Natronlauge bei Einhaltung der Zielprozessgrößen pH-Wert und Temperatur gerecht wird. Dabei besteht eine besondere Aufgabe in der Regelung des pH-Wertes, welcher sich in einer logarithmischen Abhängigkeit zur Konzentration an Hydroniumionen in der wässrigen Lösung entwickelt. Zudem besteht die weitere besondere technische Aufgabe darin, prozessbedingte Druckschwankungen in den der Neutralisation vorgelagerten Verfahrensschritten und damit verbundene Massendurchflussschwankungen in einem bestimmten Toleranzfenster automatisch auszugleichen.

Die Aufgabe wird dadurch gelöst, dass die Neutralisation von Salzsäure mit einem Volumenstrom von mindestens 1 m³/h mit Alkalilauge in mindestens 3 Reaktionsstufen durchgeführt wird, die eine Grobeinstellung, Feineinstellung und Endeinstellung des pH-Wertes beinhalten und von Stufe zu Stufe jeweils gekühlte, zurückgeführte Teilströme der Reaktionsmischung beinhalten, die in diesen Stufen die jeweilige Reaktionswärme aufnehmen. Wobei zur Sicherstellung des gewünschten pH-Wertes am Ende die Homogenisierung der Lösung der Ausgangstoffe sowie deren dem Prozessablauf folgenden unterschiedlichen Reaktionsmischungen sicherzustellen ist.

Insbesondere findet zur Realisierung des Ziel-pH-Wertes ein Konzept aus drei Reaktionsstufen Anwendung, welches die Dosierung der benötigen Neutralisationsmengen unter Berücksichtigung des maximalen pH-Sprungs einer Reaktionsstufe erlaubt und den maximal einsetzbaren Konzentrationen der Edukte Rechnung trägt. Mit dieser Dreistufigkeit ist es möglich, den Anforderungen an die Dosiermengen basierend auf der benötigen Restmenge an Neutralisationsmittel zum Ziel-pH-Wert gerecht zu werden. Entsprechend nimmt die Dosierkapazität mit steigender Reaktionsstufenzahl ab. Die absteigenden Dosierkapazität spiegelt sich in der Wahl der Dosierventile wieder.

Gegenstand der Erfindung ist ein Verfahren zur mehrstufigen, insbesondere dreistufigen kontinuierlichen Neutralisation von Salzsäure mit einer HCl-Konzentration von mindestens 10 Gew.-% und mit einem Volumenstrom von mindestens 1 m³/h, bevorzugt mindestens 5 m³/h, auf einen Ziel pH-Wert im Bereich von 3 bis 9, mit den folgenden Schritten:
A) Zuführen der zu neutralisierenden Salzsäure 4 und einem Anteil von mindestens 95%, bevorzugt mindestens 99% der stöchiometrisch benötigten Alkalilauge 5 in einer ersten Stufe 1 in einen Volumenstrom 9 neutralisierter Salzsäure, der gekühlt aus einer zweiten Stufe 2 zurückgeführt wird, anschließendes Mischen der Stoffströme 4, 5, 9 und Ausreagieren der primären Reaktionsmischung 18a in einer Neutralisations- und Verweilzone 17a), wobei der pH Wert des aus der ersten Stufe 1 ablaufenden Stromes 6 mindestens pH 1 aufweist, wobei der Volumenstrom 9 der aus der zweiten Stufe 2 gekühlt zurückgeführt wird, wenigstens dem 3-fachen des Salzsäure-Volumenstromes entspricht, der in die erste Stufe 1 zugeführt wird,
B) Überführen des Volumenstroms 6 aus der ersten Stufe 1 in eine Neutralisationszone 17b der zweiten Neutralisationsstufe 2), weiteres Einstellen des pH-Wertes der sekundären Reaktionsmischung 18b auf einen Wert von bevorzugt pH 3 mittels Zugabe von Alkalilauge 5' oder Salzsäure 4' an den Dosierstellen 7" und 7'" in einem Nebenkreislauf 7', wobei dieser Nebenkreislauf 7' aus der Entnahme eines Teilstroms aus dem zu kühlenden Hauptstrom 7 der zweiten Reaktionsstufe 2 resultiert, wobei das Verhältnis des Volumenstroms 7 der neutralisierten Salzsäure zum Volumenstrom des Teilstroms 7' wenigstens 10 zu 1 beträgt und, nach erfolgter Kühlung 8 des Hauptstromes der zweiten Stufe, Rückführung eines weiteren größeren Teilstroms 9 der Sekundären Reaktionsmischung 18b der zweiten Stufe 2 in die erste Neutralisationsstufe 1 zur Durchführung der Reaktion A),
C) Zuführen eines weiteren Teilstroms 10 aus der sekundären Reaktionsmischung 18b der zweiten Stufe 2 in eine Neutralisationszone 17c einer dritten Neutralisationsstufe 3), weiteres Einstellen des pH-Wertes der tertiären Reaktionsmischung 18c in der dritten Neutralisationsstufe 3 auf einen pH-Wert im Bereich von pH 3 bis pH 9 mittels Zugabe von Alkalilauge 5' oder Salzsäure 4' insbesondere an den Dosierstellen 11" und 11'" in einem weiteren Nebenkreislauf 11'), der der Neutralisationszone 17c angeschlossen ist, wobei dieser Nebenkreislauf 11' aus einem kleineren Teilstrom des aus der dritten Stufe austretenden Hauptstroms 11 der Reaktionsmischung 17c besteht, welcher einer Kühlung 12 zugeführt wird und wobei der größere Teilstrom 13 des aus der dritten Stufe austretenden Hauptstroms 11 nach erfolgter Kühlung 12 einer finalen Qualitätskontrolle auf Temperatur- und pH-Wert-Überwachung zugeführt wird und im Falle, dass dieser gekühlte Strom 13 der tertiären Reaktionsmischung 18c vorgegebene Qualitätskriterien erfüllt, dieser Strom 13 als Produktstrom 15 entnommen wird, oder andernfalls die tertiäre Reaktionsmischung 18c in die dritte Stufe 3 als Rückführstrom 16 zur weiteren pH-Wert Einstellung einzuleiten ist.

In einer bevorzugten Ausführung des neuen Verfahrens wird als Neutralisationsmittel (Alkalilauge) Natronlauge verwendet. Bevorzugt wird als Neutralisationsmittel Natronlauge mit einem Gehalt von NaOCl von weniger als 100 ppm verwendet. Die Konzentration der konzentrierten Natronlauge beträgt bevorzugt mindestens 15 Gew.-%, besonders bevorzugt mindestens 25 Gew.-%, ganz besonders bevorzugt mindestens 30 Gew.-%.

Das neue Verfahren wird vorzugsweise so ausgeführt, dass die mittlere Verweilzeit der Reaktionsmischung 18a in der ersten Neutralisationsstufe 1 von 20s bis 3 min beträgt.

Die mittlere Verweilzeit der sekundären Reaktionsmischung 18b in der zweiten Neutralisationsstufe 2 beträgt in einer weiteren bevorzugten Ausführung des Verfahrens von 15 bis 100 min.

Die mittlere Verweilzeit der tertiären Reaktionsmischung 18c in der dritten Neutralisationsstufe 3 beträgt in einer anderen bevorzugten Ausführung des neuen Verfahrens von 45 bis 250 min.

Eine besonders bevorzugte Variante des neuen Neutralisationsverfahrens ist dadurch gekennzeichnet, dass unabhängig voneinander die Temperatur der primären Reaktionsmischung 18a am Auslauf der ersten Stufe 1 auf einen Wert im Bereich von 45 °C bis 80°C bevorzugt von 65 °C bis 70°C eingestellt wird, die Temperatur der sekundären Reaktionsmischung 18b), welche direkt in der zweiten Reaktionsstufe 2 gemessen wird, auf einen Wert im Bereich von 40°C bis 75°C bevorzugt von 60°C bis 65°C eingestellt wird und die Temperatur der tertiären Reaktionsmischung 18c am Auslauf der Kühlung der dritten Stufe 12 auf einen Wert im Bereich von 15 °C bis 55°C bevorzugt von 25 °C bis 50°C eingestellt wird. Dabei beträgt die Zieltemperatur der tertiären Reaktionsmischung 18c im Produktstrom 15 beim Verlassen der Anlage besonders bevorzugt maximal 30°C.

In einer bevorzugten Ausführung der Erfindung kommt eine bestimmte Anordnung aus statischem Mischer und Mischdüsen zum Einsatz. In der ersten Reaktionsstufe werden dafür beide Eingangsströme in einem Statikmischer vereint, um anschließend in vergleichsweise kurzer Zeit eine homogene Reaktionsmischung zu erhalten.

Eine weitere besonders bevorzugte Ausführung des neuen Neutralisationsverfahrens ist daher dadurch gekennzeichnet, dass das Mischen der Stoffströme 4, 5, 9 in der ersten Neutralisationsstufe 1 in einem statischen Mischer erfolgt, wobei der statische Mischer eine Mischgüte von mindestens 98% bevorzugt 99% aufwcist.

Unter dem Qualitätsmerkmal Mischgüte wird hier das Verhältnis des Volumens mit homogener Verteilung an Natronlauge, Salzsäure sowie deren Reaktionsprodukt zu dem Gesamtvolumen verstanden. In diesem Zusammenhang ist das Ziel der Homogenität, dass jede Probe eine Zusammensetzung widerspiegelt, die der Grundgesamtheit entspricht. Die Mischgüte stellt sich in Abhängigkeit des Volumenstroms und des daraus resultierenden Druckverlustes an den Mischelementen, welche eine Querdurchmischung aufgrund der Turbulenz im Mischrohr erzeugen, ein und wird in einem Abstand von 4 x Rohrdurchmesser nach jenem Mischelement bestimmt. Dabei wird die Strecke hinter dem Kontaktpunkt der zu mischenden Fluide bis zum Erreichen der Mischgüte als Mischstrecke bezeichnet.

In einer besonderen Ausführung folgt dem Statikmischer ein nachgeschalteter Behälter, der aufgrund seines Volumens eine Verweilzeit 17a zum Ausreagieren der Reaktionsmischung der ersten Stufe 18a bewirkt. Damit wird der Effekt der Homogenisierung der Reaktionsmischung weiter verstärkt. Dies ist zudem förderlich um eine verlässliche pH-Messung für die Reaktionsmischung 18a durchführen zu können.

In beiden weiteren Stufen B) und C) (2. und 3. Reaktionsstufe) sind insbesondere Mischdüsen vorgesehen, um einerseits die einströmenden Massenströme zu mischen und andererseits eine Homogenisierung innerhalb der Reaktionsbehälter herbeizuführen.

Eine bevorzugte Variante des neuen Verfahrens ist dadurch gekennzeichnet, dass in der Neutralisationszone 17b und/oder in der Neutralisationszone 17c jeweils ein Puffervolumen im Bereich von ca. 25 % des nutzbaren Behältervolumens zur Kompensation von Schwankungen des Eingangsvolumenstroms vorgesehen ist.

Besonders bevorzugt wird das neue Neutralisationsverfahren so gestaltet, dass die Vermischung der sekundären Reaktionsmischung 18b mit dem Teilstrom 4', 5', 7' und die Vermischung der tertiären Reaktionsmischung 18c mit dem Teilstrom 4', 5', 11' unabhängig voneinander unter Verwendung von Rührwerkzeugen 19 in der Neutralisationszone 17b bzw. 17c oder über Mischdüsen 20 erfolgt, die im Eingangsbereich der Zuleitungen der Teilströme 7' bzw. 11' zu der Neutralisationszone 17b bzw. 17c vorgesehen sind.

In allen Stufen sind die Dosierventile für die Dosierung von Natronlauge insbesondere zweifach ausgeführt um einen möglichst exakte Mengendosierung vornehmen zu können. Dementsprechend existiert pro Neutralisationsstufe ein grobes Dosierorgan und ein kleines Ventil zur Feineinstellung. Für die Zugabe von Salzsäure ist diese zweifache Ausführung der Dosierorgane nicht unbedingt notwendig, wenn insbesondere in der ersten Stufe ein Sollwert vorgegeben wird und in den anderen Stufen lediglich einem Überschwingen des pH-Wert entgegengewirkt wird und keine konkrete Regelaufgabe vorliegt.

Weiterhin ist es hilfreich in einer bevorzugten Ausführung des Verfahrens eine bestimmte Verweilzeit für die Reaktion von Natronlauge und Salzsäure zu gewährleisten. Dafür sind entsprechende Verweilzeiten in den Reaktionsstufen vorgesehen. Da der bevorzugt einzusetzende Statikmischer in der ersten Stufe kaum Verweilzeiten erzeugt, wird ein Verweilzeitbehälter im Statikmischer nachgeschaltet. Dies ermöglicht der Reaktionsmischung auszureagieren und steigert die Aussagekraft der pH-Messung nach der ersten Stufe. Die gleichen technische Notwendigkeit spricht für die Ermöglichung entsprechender Verweilzeiten in der zweiten und dritten Stufe, die jedoch im Gegensatz zu ersten Stufe insbesondere über integrierte Reaktionsbehältervolumen realisiert wurden. Dies hat zusätzlich den Vorteil einer Pufferfähigkeit des Systems bei Störungen der Prozessgrößen der Eingangsströme und verhindert damit das direkte Abschalten der Anlage bei Verlassen dieser Prozessfenster. Die Volumina des zweiten und dritten Reaktionsbehälters wurden in einer bevorzugten Ausführung so ausgewählt, dass ein Aufschaukeln der pH-Regelungen vermieden wird (Resonanzkatastrophe).

Die gesamte Anlage zur Durchführung des neuen Verfahrens ist insbesondere als Durchlaufanlage ausgeführt und ist für einen kontinuierlichen Betrieb ohne Notwendigkeit der Durchflussunterbrechung aufgrund von Reaktions- oder Rüstzeiten ausgelegt. Damit kann eine durchgehende Verarbeitung von Salzsäure gewährleistet werden und Lasteinschränkungen oder - Schwankungen vorgelagerter Prozesse sind nicht zu befürchten.

Die bei der Neutralisationsreaktion entstehende Wärme wird insbesondere mittels Kühlwasserkühler über separate Kreisläufe in der zweiten und dritten Reaktionsstufe schrittweise abgeführt. Dabei wird in der zweiten Stufe ein Teilstrom zu Kühlzwecken auch vor die erste Stufe zurückgeführt. Für den Transport der Reaktionsmischung zu den Wärmetauschern kommen typischerweise Umwälzpumpen zum Einsatz, die zusätzlich zu einem Vermischungseffekt einerseits innerhalb des Aggregates (durch Rotation des Laufrades) und andererseits durch die Rückführung auf die Behälter führen. Mit diesen Maßnahmen wird insbesondere sichergestellt, dass werkstofftechnische Grenzen eingehalten werden und das produzierte neutralisierte Abwasser innerhalb der jeweils vorgegebenen spezifizierten Anforderungen liegt und damit für weitere Prozesse genutzt werden kann.

In dem neuen Verfahren wird in einer bevorzugten Ausführung Alkalilauge, insbesondere Natronlauge mit einem Gehalt von NaOCl von weniger als 100 ppm eingesetzt, damit sich keine Bildung von freiem Chlor während der Reaktion einstellt, welches wiederrum den Einsatz eines Reduktionsmittels erfordern würde.

Im Bedarfsfall wird die eingesetzte Alkalilauge, bevorzugt Natronlauge, vor dem Einsatz mit einem Reduktionsmittel, vorzugsweise Natriumbisulfit versetzt um den vorgenannten Höchstgehalt von NaOCl einzustellen. Alternativ kann das Reduktionsmittel auch in der zweiten Neutralisationsstufe des Verfahrens dem Strom der Alkalilauge, insbesondere der Natronlauge zugesetzt werden.

Die Erfindung wird nachfolgend anhand der Figuren durch die Beispiele, welche jedoch keine Beschränkung der Erfindung darstellen, näher erläutert.

Es zeigen:

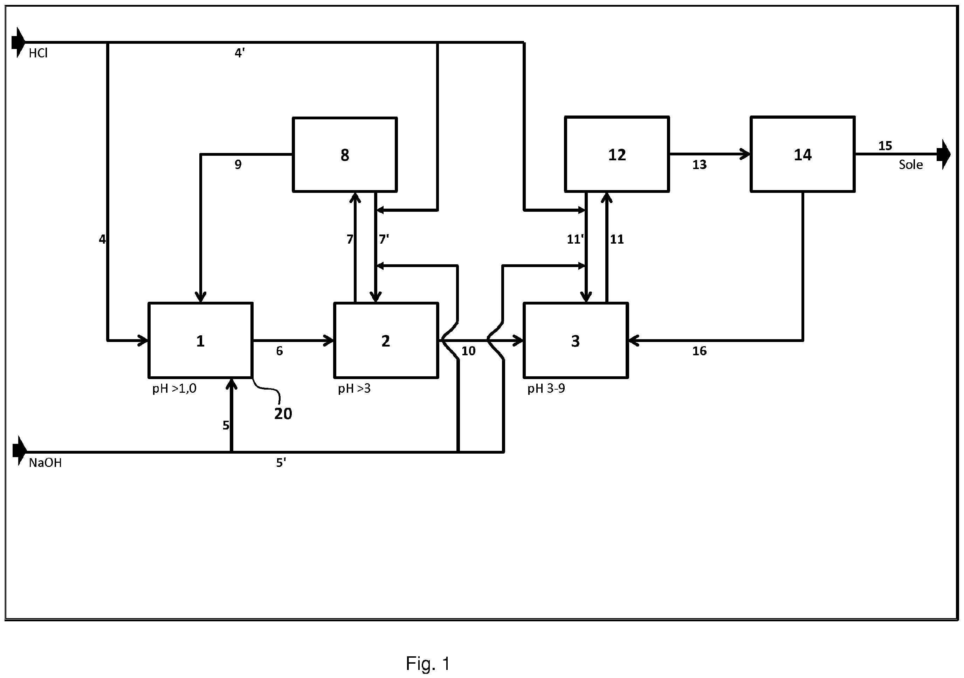

- Fig. 1: eine schematische Ansicht einer dreistufigen Neutralisation von Salzsäure

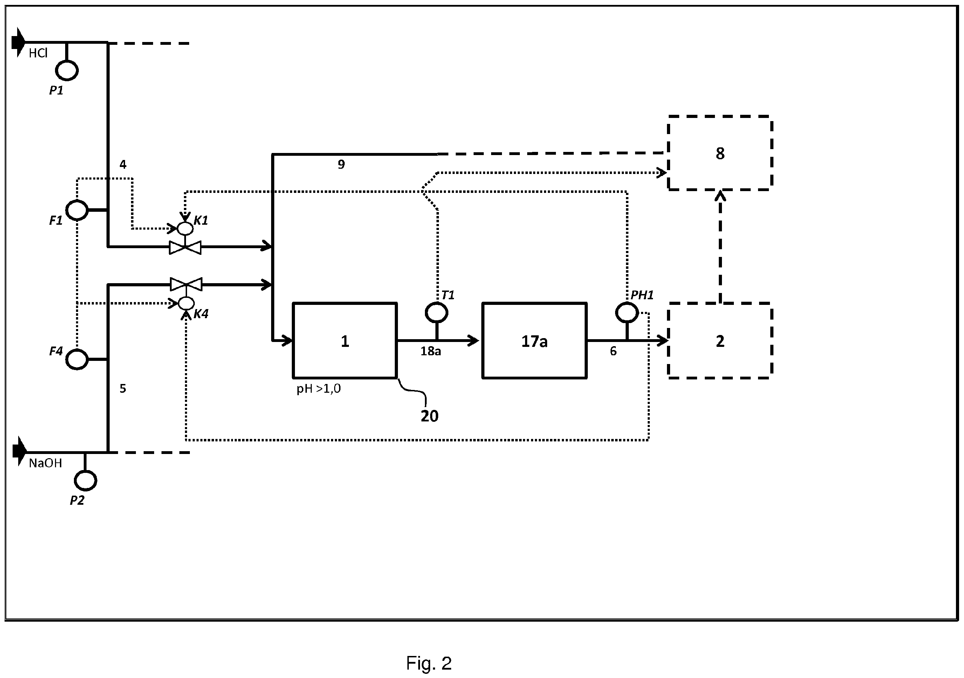

- Fig.2: schematische Ansicht zu Details der erste Neutralisationsstufe

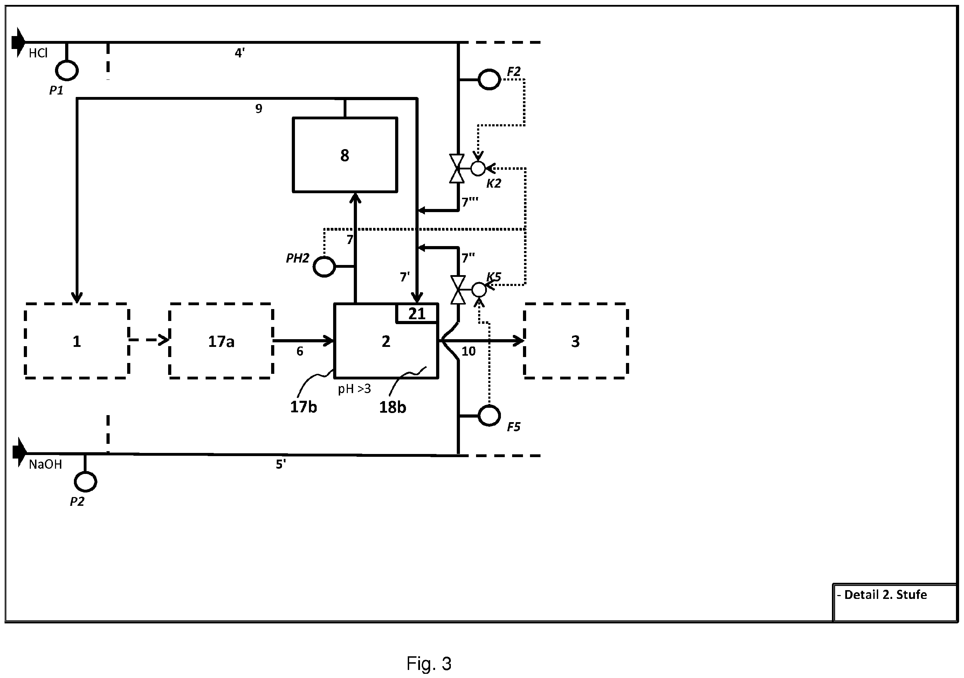

- Fig.3: schematische Ansicht zu Details der zweiten Neutralisationsstufe

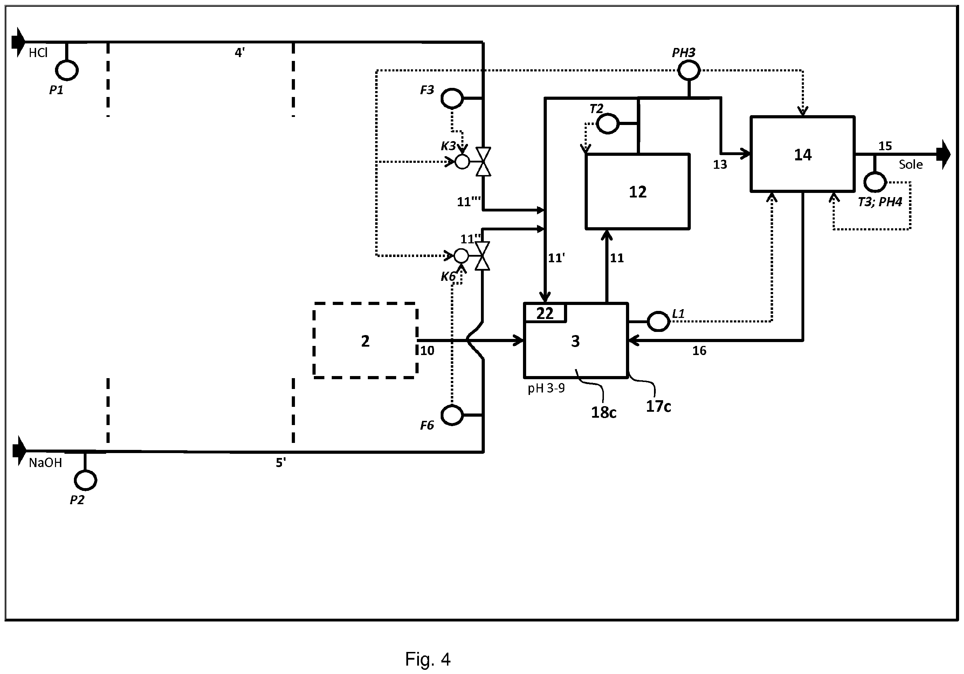

- Fig.4: schematische Ansicht zu Details der dritten Neutralisationsstufe

In den Figuren haben die Bezugszeichen die nachstehende Bedeutung:
- 1: erste Neutralisationsstufe
- 2: zweite Neutralisationsstufe
- 3: dritte Neutralisationsstufe
- 4: zu neutralisierende Salzsäure
- 4': Salzsäurestrom zur Einstellung des Ziel-pH-Wertes in 2. und 3. Stufe
- 5: Natronlauge
- 5': Natronlaugestrom zur Einstellung des Ziel-pH-Wertes in 2. und 3. Stufe
- 6: aus der ersten Stufe austretende Reaktionsmischung
- 7: Hauptstrom aus der zweiten Neutralisationsstufe
- 7': kleinerer Nebenkreislauf an teilneutralisierter Salzsäure vom Hauptstrom 7
- 7": Dosierung Natronlauge in Nebenkreislauf der zweiten Neutralisationsstufe
- 7''': Dosierung Salzsäure in Nebenkreislauf der zweiten Neutralisationsstufe
- 8: Kühlung der ersten und zweiten Neutralisationsstufe
- 9: Rückführung gekühlter Reaktionsmischung der zweiten Stufe
- 10: aus der zweiten Stufe austretende Reaktionsmischung
- 11: aus der dritten Stufe austretende Reaktionsmischung
- 11': kleinerer Nebenkreislauf an neutralisierter Salzsäure von Strom 11
- 11": Dosierung Natronlauge in Nebenkreislauf der dritten Neutralisationsstufe
- 11''': Dosierung Salzsäure in Nebenkreislauf der dritten Neutralisationsstufe
- 12: Kühlung der dritten Neutralisationsstufe
- 13: gekühlte Reaktionsmischung der dritten Stufe
- 14: Kontrolle der Abgabekriterien bzw. Qualität des Produktstromes
- 15: abgeführter Produktstrom der Neutralisation im Qualitätsfenster
- 16: rückgeführte Reaktionsmischung außerhalb des Qualitätsfensters
- 17a: Verweilzeit- und Neutralisationszone nach der ersten Stufe
- 17b: Neutralisationszone der zweiten Stufe
- 17c: Neutralisationszone der dritten Stufe
- 18a: (primäre) Reaktionsmischung der ersten Stufe
- 18b: (sekundäre) Reaktionsmischung der zweiten Stufe
- 18c: (tertiäre) Reaktionsmischung der dritten Stufe
- 20: Statikmischer der ersten Stufe
- 21: Mischdüsen der zweite Stufe
- 22: Mischdüsen der dritten Stufe
- F1: Durchflussmessung Salzsäure Zulauf erste Neutralisationsstufe
- F2: Durchflussmessung Salzsäure Zulauf zweite Neutralisationsstufe
- F3: Durchflussmessung Salzsäure Zulauf dritte Neutralisationsstufe
- F4: Durchflussmessung Natronlauge Zulauf erste Neutralisationsstufe
- F5: Durchflussmessung Natronlauge Zulauf zweite Neutralisationsstufe
- F6: Durchflussmessung Natronlauge Zulauf dritte Neutralisationsstufe
- K1: Regelorgan Salzsäure Zulauf erste Neutralisationsstufe
- K2: Regelorgan Salzsäure Zulauf zweite Neutralisationsstufe
- K3: Regelorgan Salzsäure Zulauf dritte Neutralisationsstufe
- K4: Regelventilpaar Natronlauge Zulauf erste Neutralisationsstufe
- K5: Regelventilpaar Natronlauge Zulauf zweite Neutralisationsstufe
- K6: Regelventilpaar Natronlauge Zulauf dritte Neutralisationsstufe
- P1: Eingangsdruckmessung Salzsäure
- P2: Eingangsdruckmessung Natronlauge
- PH1: pH-Messung nach erster Neutralisationsstufe für pH-Regelung
- PH2: pH-Messung nach zweiter Neutralisationsstufe für pH-Regelung
- PH3: pH-Messung nach dritte Neutralisationsstufe für pH-Regelung
- PH4: Kontrolle Ziel-pH-Wert
- T1: Temperaturmessung nach erster Neutralisationsstufe für Kühlwasserregelung
- T2: Temperaturmessung nach dritter Neutralisationsstufe für Kühlwasserregelung
- T3: Kontrolle Zieltemperatur

### Beispiele

### Beispiel 1

Nach dem Anfahren der Kühl- und Pumpenkreisläufe sowie der Aktivierung der Eduktversorgung ist die Neutralisationsanlage betriebsbereit. Es liegen für die eingesetzte 32%ige Natronlauge an der Messstelle P2 ein Betriebsdruck von 6,3 bar / 0,63 MPa und für die zu neutralisieren 31%ige Salzsäure an der Messstelle P1 ein Betriebsdruck von 5,4 bar / 0,54 MPa an. Über den Betriebsmitarbeiter wird ein Sollwert für den zu neutralisierenden Salzsäurestrom im Prozessleitsystem vorgegeben. Ein Salzsäureeingangsstrom 4 mit einem Volumenstrom von 30,0 m³/h wird in den Rückführungsstrom gekühlter Reaktionsmischung der zweiten Stufe 9eingeleitet. Über eine Verhältnisregelung F1 und F2 sowie über die pH-Regelung der ersten Stufe PH1 wird über das Regelventilpaar des Natronlaugezulaufes der erste Neutralisationsstufe K4 eine Menge von 28,5 m³/h dem Strom aus 9 und 4 zudosiert. Jener Gesamtvolumenstrom von 179 m³/h gelang anschließend in einen Statikmischer 20, welcher das Mischorgan der ersten Neutralisationsstufe 1 darstellt. Nach dem Durchlaufen einer intensiven Homogenisierung erfolgt nach dem Statikmischer die Messung der Temperatur T1 zur Regelung der Kühlwasserdurchflussmenge für die Kühlung der ersten und zweiten Stufe 8. Es stellt sich an dieser Stelle eine Temperatur von 65,4 °C ein. Anschließend gelangt die primäre Reaktionsmischung 18a in eine Verweilzeit- und Neutralisationszone 17a, die mittels eines durchströmten Behälters realisiert wurde und zum weiteren Ausreagieren jener Reaktionsmischung vorgesehen wurde, um anschließend eine verlässliche pH-Messung PH1 zur Regelung der zugeführten Natronlaugemenge 5 zu garantieren. In der austretenden Reaktionsmischung der ersten Stufe 6 stellt sich ein pH-Wert von 1,6 ein.

Im nächsten Schritt gelangt die noch saure Salzsole in die bei Umgebungsdruck betriebene, zweite Stufe der Neutralisationsanlage 2. Deren Verweilzeit wird durch einen drucklos betriebenen, hoch gesetzten Reaktionsbehälter (nicht gezeichnet) gewährleistet, indem sich über einen freien Überlauf im Normalbetrieb ein Füllstand von 58,3 % einstellt, die etwa 30 m³ entsprechen. Durch den Einbau der Mischdüsen 21 wird die entstehende Turbulenz in der Reaktionsstufe 2 für das Vermischen genutzt. Zudem saugen die Mischdüsen 21 einen etwa vierfachen Strom aus dem umgebenden Behältervolumen jene Reaktionsmischung 18b mit an. Zwei kleine Mischdüsen sind tangential zum Boden ausgerichtet und ein großer Jetmischer wirkt schräg nach oben zentral und sorgt so für die Durchmischung im Volumen. Diesen Mischprinzip kommt analog in der dritten Neutralisationsstufe 3 zur Anwendung. Aus dieser Stufe wird ein Hauptstrom 7 der Reaktionsmischung 18b entnommen und der Kühlung 8 zugeführt. Hier wird ein Großteil der Neutralisationswärme der ersten und zweiten Stufe auf das Kühlwasser übertragen. Dabei erwärmt sich das Kühlwasser der Kühlung 8 von 14,7 °C auf 24,5 °C. Der Hauptanteil des so vorgekühlten Sole-Ablauf wird vor die ersten Stufe der Neutralisation 1 in Form des Rückführstromes 9 in Höhe von 120 m³/h gefahren. Ein kleinerer Teilstrom 7' dieser Sole betreibt in einem Nebenkreislauf die Mischdüsen 21. In diesen Strom werden nach Vorgabe der pH-Regelung PH2 120,0 l/h an Lauge an der Dosierstelle 7" und 0,7 l/h an Säure an der Dosierstelle 7"' zu dosiert. Die Rückkopplung der Dosiereinrichtung K5 erfolgt wieder durch einen Durchflussmesser F5. Beim Fördern des Nebenstromes 7' durch die Mischdüsen 21 erfolgt die Homogenisierung der Reaktionsmischung 18b in der Neutralisationszone 17b und es stellt sich ein pH-Wert von 9,2 ein, der im Ablauf 7 dieser Neutralisationsstufe 2 zur Kühlung 8 durch die pH-Messung PH2 gemessen wird.

Die Reaktionsmischung 18b gelangt in Form des Stromes 10 aus der zweiten Stufe 2 über einen Überlauf in die dritte Stufe der Neutralisation 3, welche aufgrund des 3-fachen Fassungsvolumens eine deutlich höhere Verweilzeit realisiert. Dieses Volumenverhältnis von dem Volumen der zweiten zum Volumen der dritten Stufe wurde ausgeführt, um ein Aufschaukeln der Regelungen und einer damit verbundenen Resonanzkatastrophe zu vermeiden. Aus dieser dritten Stufe wird ebenfalls ein Hauptstrom 11 der Reaktionsmischung 18c entnommen und der Kühlung 12 zugeführt. In jenen Prozessschritt wird die Neutralisationswärme der dritten Stufe auf das Kühlwasser übertragen. Dabei erwärmt sich das Kühlwasser der Kühlung 12 von 14,7 °C auf 29 °C. Im Gegenzug kühlt sich die Reaktionsmischung 18c von 36,5 °C auf 29 °C ab. Für die Kühlung der ersten, zweiten und dritten Stufe (8 und12) wird ein Kühlwasservolumenstrom von 466 m³/h benötigt. Nach erfolgter Kühlung betriebt der Nebenkreislauf 11' die Mischdüsen 22 der dritten Neutralisationsstufe 3. In diesen Strom werden nach Vorgabe der pH-Regelung PH3 28,0 l/h an Lauge an der Dosierstelle 11" und 34,0 l/h an Säure an der Dosierstelle 11'" zu dosiert. Beim Fördern des Nebenstromes 11' durch die Mischdüsen 22 erfolgt die Homogenisierung der Reaktionsmischung 18c in der Neutralisationszone 17c und es stellt sich ein pH-Wert von 8,6 ein, der im Strom 13 durch die pH-Messung PH3 gemessen wird. Zur Absicherung der Erfassung des Abgabe pH-Wert aus der dritten Stufe und aus Verfügbarkeitsanforderungen an die Messtechnik wurde diese pH-Messung dreifach (redundant) ausgeführt. In Abhängigkeit des Füllstandes in die dritten Reaktionsstufe 3, wird über eine Füllstandsregelung L1 die Reaktionsmischung 18c bei Einhaltung der Abgabekriterien pH-Wert (Messung PH3 und PH4) und Temperatur (Messung T3) im Verfahrensschritt 14 ausgeschleust. Es werden 58,7 m³/h bei einem konstanten Füllstand von 60,8 % abgegeben. Bei Überschreitung der Grenzwerte für die Parameter der resultierenden Sole in Strom 13 wird die Abgabe unterbrochen und der Volumenstrom 13 in Form des Stromes 16 wieder zurück zur dritten Neutralisationsstufe 3 gefördert. Es kann damit im ersten Schritt Sole in der zweiten und dritten Reaktionsstufe (2 und 3) kurzfristig zwischengepuffert. Dazu werden im regulären Betrieb jene beiden Reaktionsstufen nur zu ca. ¾ gefüllt betrieben. Im zweiten Schritt wird, falls das Nachregeln des Kreislaufbetriebs der dritten Stufe nicht erfolgreich ist, der Zustrom an Säure und damit Lauge in die erste Stufe sukzessive herunter gefahren (siehe Konzept Lastreduzierung).

### Details zur Ausführung der Dosiereinrichtungen:

Die Lauge für die erste Stufe 1 wird aus dem Netz über zwei parallel angeordnete Ventile K4 dosiert, die eine gestaffelte Ventilgröße (kvs-Wert) aufweisen. Das feine Ventil wird direkt geregelt und hat einen um Faktor 10 geringeren Maximaldurchsatz als das gröbere Ventil. Letzteres wird langsamer von der Stellgröße des kleinen Ventils geregelt, damit es zu keiner Resonanz zwischen den Ventilen kommt. Wenn das kleinere Ventil beim Hochfahren der Produktion über eine Rampe an seine maximale Öffnung kommt, wird das gröbere Ventil geringfügig geöffnet. Dadurch kann das kleinere wieder etwas schließen. Dieses Anstoßen des größeren Ventils erfolgt so häufig, bis der erforderliche Ziel-pH-Wert erreicht wird. Ebenso schließt das gröbere Ventil schrittweise, wenn das feine Ventil zu schließen droht. Somit kann eine schnelle und auch genaue Regelung des Laugenstromes erreicht werden. Im Übergangsbereich zur ersten Öffnung des gröberen Ventils wird eine Hysterese gefahren, weil die Ventile im Grenzbereich nicht mehr linear dosieren. So fährt das kleine Ventil in diesem Bereich über den gesamten Stellbereich, während es bei höheren Volumenströmen zwischen 20 und 80 % Stellgröße bleiben soll.

Dieses hier am Beispiel der ersten Stufe beschriebene Grundprinzip wird analog auch in der zweiten Stufen 2 an der Natronlaugedosierung K5 und dritten Stufe 3 an der Natronlaugedosierung K6 umgesetzt. Die zweite und die dritte Stufe versuchen primär die vorgegebenen pH-Werte einzuregeln. Während die Bandbreite für die dritte Stufe durch die Abgabegrenzen vorgegeben sind, kann die erste und zweite Stufe entsprechend der Leistungsfähigkeit der Regelungen vorgegeben werden. Da die erwarteten Dosierströme an Natronlauge in der dritten Stufe sehr klein sind, erfolgt die die Dosierung über ein Ventil und parallel über eine Verdrängerpumpe.

Aufgrund der hohen Genauigkeitsanforderungen durch die angestrebten pH-Werte der Stufen an die Dosierung, ist ein Überschwingen möglich. Zwar läuft aus den vorherigen Stufen nach der Korrektur der Regelung wieder saure Lösung nach, aber wegen der zum Teil langen Verweilzeiten wurde zusätzlich eine Dosierung an Säure an den beiden Stufen 2 und 3 realisiert. Das einfache Regelventil wird wieder über den nachfolgenden Durchflussmesser geführt.

### Details zur Ausführung des Regelungskonzeptes:

Das hier beschriebene, umfassende Verfahrenskonzept basiert auf einem Regelungskonzept, welches durch die Messung vieler Prozessgrößen wie Eingangsvolumenströme, Eingangsdrücke sowie Temperatur, Füllstand und pH-Wert je Reaktionsstufe und weiterhin die Überwachung der Kühlwassertemperatur gekennzeichnet ist, erlaubt einerseits den vollautomatisierten Betrieb der Anlage über eine intelligente Prozesssteuerung und andererseits eine bestimmte Varianz der Prozessparameter der Eingangsmedien (Konzentration, Druck und Menge), auf die sich das Gesamtsystem automatisiert einstellt. Dabei ist im Normalbetrieb ein direkter Eingriff des Operators nach dem Starten der Anlage nicht erforderlich. Somit kommt je Stufe eine Regelungskreis zum pH-Wert zum Einsatz, der die Mengen an benötigtem Neutralisationsmittel bestimmt und an den Dosierventilen einstellt. Dementsprechend wird pro Stufe ein konstanter pH-Wert anvisiert, der sich mit steigender Reaktionsstufenzahl dem Ziel-pH-Wert annähert.

Das integrierte Konzept zur Lastregelung ermöglicht die Neutralisationsanlage unter effizienter Auslastung zu fahren und vereinfacht die Bedienung der Anlage deutlich. Die Lastregelung nimmt eine automatische Reduzierung der Last vor, um kritische Prozessgröße unterhalb ihrer Grenzwerte zu halten. Somit kann die Kapazität der Neutralisationsanlage der erforderlichen Neutralisationskapazität optimal und ökonomisch angepasst werden. Dabei wird die Neutralisationsanlage automatisch unter maximaler Last bei Einhaltung der vorgegeben Grenzwerte für die Prozessparameter der Produktlösung und optimaler Ausnutzung der Anlagenkapazität bei maximalem Umsatz gefahren. Bei dieser Lastregelung unter Berücksichtigung der Regelung von lastabhängigen Prozessgrößen wird die Vorgabe einer konstanten Last-Sollwerts für den zu neutralisierenden HCl-Strom (4) durch den Anlagenfahrer mit einer automatischen Laständerung durch das im Prozessleitsystem im Falle des Annäherns von Prozessgrößen an ihrem oberen Grenzwert kombiniert. Dieses Konzept ist für Anwendungen geeignet, in denen die Last eine inverse Wirkrichtung auf die Prozessgrößen hat, d.h. eine Erhöhung/Erniedrigung der Last zu einem Anstieg/Absenken der Prozessgröße führt. Im Normalbetrieb, d.h., dass die berücksichtigten Prozessgrößen (T1, PH1, PH2, T2, PH3, T3, PH4 sowie weitere Qualitätsgrößen (Trübe und Leitfähigkeit)) sich unterhalb ihres Grenzwerts befinden, wird die durch den Anlagenfahrer vorgegebene Last gefahren. Die Tatsache, dass die kritischen Prozessgrößen im unkritischen Bereich sind, zeigt dem Anlagenfahrer an, dass der Sollwert der Last durch einen Eingriff des Anlagenfahrers erhöht werden kann. Wenn die jeweilige Prozessgröße sich ihrem oberen Grenzwert annähert, wird eine automatische Laständerung durch das Prozessleitsystem vorgenommen, um die abweichende Prozessgröße unterhalb ihres Schwellwerts zu halten. Die automatische Laständerung erfolgt über für die jeweilige Prozessgröße vorgesehene Regelkreise (z.B. PID, MPC). Hierfür sind für die Lastvorgabe und die Prozessgrößen jeweils überlagerte Master-Regelkreise vorgesehen, die das Ziel haben die jeweilige Prozessgröße mit der Last als Stellgröße auf ihren Sollwert zu regeln . Die Stellgrößen der überlagerten Master-Regelkreise sind jeweils Sollwerte für den unterlagerten Regelkreis (Slave), der über einen Aktor (z.B. Ventil K1) in den Prozess eingreift, so dass bei den vorherrschenden Druckverhältnissen und den gegebenen Ventileigenschaften sich der vom Slave-Regler geforderte Strom einstellt.

Eine weitere regelungstechnische Optimierung der Prozessführung besteht in der automatischen Kühlwasserregelung. Die Prozesstemperaturen der ersten sowie zweiten und dritten Neutralisationsstufe werden gemessen und bei Überschreitung der Sollwerte wird mittels Aktoren in Form von Regelventilen automatisch der Kühlwasserstrom erhöht. Dabei besteht für die Temperaturmessung der ersten Neutralisationsstufe (T1) ein Regelkreis auf Kühlwassermenge der Kühleinrichtung der ersten und zweiten Stufe (8). Weiterhin wirkt die Temperaturmessung der dritten Neutralisationsstufe (T2) mittels direkter Regelung auf ein Regelventil der Kühleinrichtung der dritten Stufe (12). Damit reagiert das System auf Laständerungen oder Temperaturschwankungen und vermeidet den direkten Eingriff der automatischen Lastreduzierung bei Überschreitung einer Prozessgröße (siehe vorheriger Absatz).

Die pH-Regelungen der einzelnen Stufen sind nach Empfehlung der Literatur in Form einer "feed-forward"-Regelung umgesetzt (vgl. LIPTAK, Bela G.: Instrument Engineers Handbook. 4. Auflage, 2005, S. 2044 ff.). So wird nicht allein das lokale Volumen und der örtliche pH-Wert benutzt, sondern auch die jeweilige zulaufende Lösung der Vorstufe berücksichtigt. Für die erste Stufe fließen die zugeführten Volumenströme mit ein. Zudem werden noch die Versorgungsdrücke, die als Hauptstörgrößen erkannt wurden mit berücksichtigt. Für die zweite Stufe wird die benötigte Menge an Lauge aus dem Umwälzstrom zuzüglich der in die erste Stufe dosierten Ströme und dem pH-Wert. Für den dritten Strom geschieht diese Berechnung aus den zuvor dosierten Volumenströmen und dem pH-Wert am Auslauf der zweiten Stufe, der damit ja den Inhalt der Reaktionsmischung 18c repräsentiert.

Die Neutralisationsanlage ist gemäß den Sicherheitsanforderungen der im Einsatz befindlichen Chemikalien ausgeführt. Dabei wurden verträgliche Werkstoffe zum Einsatz gebracht und entsprechende Sicherheitskonzepte für starke Abweichung von Prozessgrößen vorgesehen. Zudem handelt es sich um eine geschlossene Anlage, bei der aufkommende saure Abluftströme zielgerichtet in eine bestehende Abluftaufbereitungsanlage gegeben werden.

## Patentansprüche

1. Verfahren zur mehrstufigen, insbesondere dreistufigen kontinuierlichen Neutralisation von Salzsäure mit einer HCl-Konzentration von mindestens 10 Gew-% und mit einem Volumenstrom von mindestens 1 m³/h, bevorzugt mindestens 5 m³/h, auf einen Ziel pH-Wert im Bereich von 3 bis 9, mit den folgenden Schritten:
A) Zuführen der zu neutralisierenden Salzsäure (4) und einem Anteil von 95%, bevorzugt mindestens 99% der stöchiometrisch benötigten Alkalilauge (5) in einer ersten Stufe (1) in einen Volumenstrom (9) neutralisierter Salzsäure, der gekühlt aus einer zweiten Stufe (2) zurückgeführt wird, anschließend Mischen der Stoffströme (4, 5, 9) und Ausreagieren der primären Reaktionsmischung (18a) in einer Neutralisations- und Verweilzone (17a), wobei der pH Wert des aus der ersten Stufe (1) ablaufenden Stromes (6) mindestens pH 1 aufweist, wobei der Volumenstrom (7) der aus der zweiten Stufe (2) gekühlt zurückgeführt wird, wenigstens dem 3-fachen des Salzsäure-Volumenstromes entspricht, der in die erste Stufe (1) zugeführt wird,
B) Überführen des Volumenstroms (6) aus der ersten Stufe (1) in eine Neutralisationszone (17b) der zweiten Neutralisationsstufe (2), weiteres Einstellen des pH Wertes der sekundären Reaktionsmischung (18b) auf einen Wert von bevorzugt pH 3 mittels Zugabe von Alkalilauge (5') oder Salzsäure (4') in einem Nebenkreislauf (7'), wobei dieser Nebenkreislauf (7') resultiert aus der Entnahme eines Teilstroms aus dem zu kühlenden Hauptstrom (7) der zweiten Reaktionsstufe (2), wobei das Verhältnis des Volumenstroms (7) der neutralisierten Salzsäure zum Volumenstrom des Teilstroms (7') wenigstens 10 zu 1 beträgt und, nach erfolgter Kühlung (8) des Hauptstromes der zweiten Stufe, Rückführung eines weiteren größeren Teilstroms (9) der Sekundären Reaktionsmischung (18b) der zweiten Stufe (2) in die erste Neutralisationsstufe (1) zur Durchführung der Reaktion A),
C) Zuführen eines weiteren Teilstroms (10) aus der sekundären Reaktionsmischung (18b) der zweiten Stufe (2) in eine Neutralisationszone (17c) einer dritten Neutralisationsstufe (3), weiteres Einstellen des pH-Wertes der tertiären Reaktionsmischung (18c) in der dritten Neutralisationsstufe (3) auf einen pH-Wert im Bereich von pH 3 bis pH 9 mittels Zugabe von Alkalilauge (5') oder Salzsäure (4') in einem weiteren Nebenkreislauf (11'), der der Neutralisationszone (17c) angeschlossen ist, wobei dieser Nebenkreislauf (11') aus einem kleineren Teilstrom des aus der dritten Stufe austretenden Hauptstroms (11) der Reaktionsmischung (17c) besteht, welcher einer Kühlung (12) zugeführt wird und wobei der größere Teilstrom (13) des aus der dritten Stufe austretenden Hauptstroms (11) nach erfolgter Kühlung (12) einer finalen Qualitätskontrolle auf Temperatur- und pH-Wert-Überwachung zugeführt wird und im Falle, dass dieser gekühlte Strom (13) der tertiären Reaktionsmischung (18c) die Qualitätskriterien erfüllt, dieser Strom 13 als Produktstrom (15) entnommen wird, oder andernfalls die tertiäre Reaktionsmischung (18c) in die dritte Stufe (3) als Rückführstrom (16) zur weiteren pH-Wert Einstellung einzuleiten ist.

2. Verfahren gemäß Anspruch 1, **dadurch gekennzeichnet, dass** als Neutralisationsmittel (Alkalilauge) Natronlauge, insbesondere Natronlauge mit einem Gehalt von NaOCl von weniger als 100 ppm, verwendet wird.

3. Verfahren gemäß Anspruch 1 oder 2, **dadurch gekennzeichnet, dass** die mittlere Verweilzeit der primären Reaktionsmischung (18a) in der ersten Neutralisationsstufe (1) von 20s bis 3 min beträgt.

4. Verfahren gemäß einem der Ansprüche 1 bis 3, **dadurch gekennzeichnet, dass** die mittlere Verweilzeit der sekundären Reaktionsmischung (18b) in der zweiten Neutralisationsstufe (2) von 15 bis 100 min beträgt.

5. Verfahren gemäß einem der Ansprüche 1 bis 4, **dadurch gekennzeichnet, dass** die mittlere Verweilzeit der tertiären Reaktionsmischung (18c) in der dritten Neutralisationsstufe (3) von 45 bis 250 min beträgt.

6. Verfahren gemäß einem der Ansprüche 1 bis 5, **dadurch gekennzeichnet, dass** unabhängig voneinander die Temperatur der primären Reaktionsmischung (18a) am Auslauf der ersten Stufe (1) auf einen Wert im Bereich von 45 °C bis 80°C bevorzugt von 65 °C bis 70°C eingestellt wird, die Temperatur der sekundären Reaktionsmischung (18b), welche direkt in der zweiten Reaktionsstufe (2) gemessen wird, auf einen Wert im Bereich von 40 °C bis 75°C bevorzugt von 60°C bis 65°C eingestellt wird und die Temperatur der tertiären Reaktionsmischung (18c) am Auslauf der Kühlung der dritten Stufe (12) auf einen Wert im Bereich von 15 °C bis 55°C bevorzugt von 25 °C bis 50°C eingestellt wird.

7. Verfahren gemäß einem der Ansprüche 1 bis 6, **dadurch gekennzeichnet, dass** das Mischen der Stoffströme (4, 5, 9) in der ersten Neutralisationsstufe (1) in einem statischen Mischer erfolgt, wobei der statische Mischer eine Mischgüte von mindestens 98% bevorzugt 99% aufweist.

8. Verfahren gemäß einem der Ansprüche 1 bis 7, **dadurch gekennzeichnet, dass** in der Neutralisationszone (17b) und der Neutralisationszone (17c) ein Puffervolumen zur Kompensation von Schwankungen des Eingangsvolumenstroms im Bereich von +/-20 % vorgesehen ist.

## Claims

1. Process for the multistage, in particular three-stage, continuous neutralization of hydrochloric acid having an HCl concentration of at least 10% by weight and a volume flow of at least 1 m³/h, preferably at least 5 m³/h, to a target pH in the range from 3 to 9, which comprises the following steps:
A) introduction of the hydrochloric acid (4) to be neutralized and a proportion of 95%, preferably at least 99%, of the stoichiometrically required alkali metal hydroxide (5) in a first stage (1) into a volume flow (9) of neutralized hydrochloric acid which is recirculated cooled from a second stage (2), subsequent mixing of the streams (4, 5, 9) and reaction of the primary reaction mixture (18a) in a neutralization and residence zone (17a), where the pH of the stream (6) flowing from the first stage (1) has a pH of at least 1 and the volume flow (7) which is recirculated cooled from the second stage (2) corresponds to at least three times the hydrochloric acid volume flow which is fed into the first stage (1),
B) transfer of the volume flow (6) from the first stage (1) into a neutralization zone (17b) of the second neutralization stage (2), further setting of the pH of the secondary reaction mixture (18b) to a value of preferably pH 3 by means of addition of alkali metal hydroxide (5') or hydrochloric acid (4') in a secondary circuit (7'), where this secondary circuit (7') results from a substream being taken off from the main stream (7) to be cooled of the second reaction stage (2) and the ratio of the volume flow (7) of the neutralized hydrochloric acid to the volume flow of the substream (7') is at least 10:1, and, after cooling (8) of the main stream of the second stage, recirculation of a further larger substream (9) of the secondary reaction mixture (18b) from the second stage (2) to the first neutralization stage (1) for carrying out the reaction A),
C) introduction of a further substream (10) of the secondary reaction mixture (18b) of the second stage (2) into a neutralization zone (17c) of a third neutralization stage (3), further setting of the pH value of the tertiary reaction mixture (18c) in the third neutralization stage (3) to a pH in the range from pH 3 to pH 9 by means of addition of alkali metal hydroxide (5') or hydrochloric acid (4') in a further secondary circuit (11') which is connected to the neutralization zone (17c), where this secondary circuit (11') consists of a smaller substream of the main stream (11) of the reaction mixture (17c) exiting from the third stage, which is passed to cooling (12), and the larger substream (13) of the main stream (11) exiting from the third stage is, after cooling (12), passed to final quality control comprising temperature and pH monitoring and, if this cooled stream (13) of the tertiary reaction mixture (18c) satisfies the quality criteria, this stream (13) is taken off as product stream (15), or else the tertiary reaction mixture (18c) is to be introduced as recycle stream (16) into the third stage (3) for further pH adjustment.

2. Process according to Claim 1, **characterized in that** sodium hydroxide, in particular sodium hydroxide having a content of NaOCl of less than 100 ppm, is used as neutralizing agent (alkali metal hydroxide).

3. Process according to Claim 1 or 2, **characterized in that** the average residence time of the primary reaction mixture (18a) in the first neutralization stage (1) is from 20 s to 3 minutes.

4. Process according to any of Claims 1 to 3, **characterized in that** the average residence time of the secondary reaction mixture (18b) in the second neutralization stage (2) is from 15 to 100 minutes.

5. Process according to any of Claims 1 to 4, **characterized in that** the average residence time of the tertiary reaction mixture (18c) in the third neutralization stage (3) is from 45 to 250 minutes.

6. Process according to any of Claims 1 to 5, **characterized in that**, independent of one another, the temperature of the primary reaction mixture (18a) at the outlet from the first stage (1) is set to a value in the range from 45°C to 80°C, preferably from 65°C to 70°C, the temperature of the secondary reaction mixture (18b), which is measured directly in the second reaction stage (2), is set to a value in the range from 40°C to 75°C, preferably from 60°C to 65°C, and the temperature of the tertiary reaction mixture (18c) at the outlet from the cooling of the third stage (12) is set to a value in the range from 15°C to 55°C, preferably from 25°C to 50°C.

7. Process according to any of Claims 1 to 6, **characterized in that** the mixing of the streams (4, 5, 9) in the first neutralization stage (1) is carried out in a static mixer, where the static mixer has a mixing quality of at least 98%, preferably 99%.

8. Process according to any of Claims 1 to 7, **characterized in that** a buffer volume for compensating for fluctuations in the inflowing volume stream in the range of +/-20% is provided in the neutralization zone (17b) and the neutralization zone (17c).

## Revendications

1. Procédé pour la neutralisation continue en plusieurs étages, en particulier en trois étages, d'acide chlorhydrique présentant une concentration en HCl d'au moins 10% en poids et à un débit volumétrique d'au moins 1 m³/h, de préférence d'au moins 5 m³/h, à une valeur de pH cible dans la plage de 3 à 9, présentant les étapes suivantes :
A) introduction de l'acide chlorhydrique (4) à neutraliser et d'une proportion de 95%, de préférence d'au moins 99%, de la quantité stoechiométriquement nécessaire de lessive alcaline (5) dans un premier étage (1) dans un flux volumique (9) d'acide chlorhydrique neutralisé, qui est recyclé sous forme refroidie à partir d'un deuxième étage (2), mélange consécutif des flux de matières (4, 5, 9) et achèvement de la réaction du mélange réactionnel primaire (18a) dans une zone de neutralisation et de séjour (17a), la valeur du pH du flux (6) s'écoulant du premier étage (1) étant d'au moins pH 1, le flux volumique (7) qui est recyclé sous forme refroidie à partir du deuxième étage (2) correspondant au moins au triple du flux volumique d'acide chlorhydrique qui est introduit dans le premier étage (1),
B) transfert du flux volumique (6) à partir du premier étage (1) dans une zone de neutralisation (17b) du deuxième étage de neutralisation (2), réglage supplémentaire de la valeur du pH du mélange réactionnel secondaire (18b) à une valeur de préférence de pH 3 par addition de lessive alcaline (5') ou d'acide chlorhydrique (4') dans un circuit secondaire (7'), ce circuit secondaire (7') résultant du prélèvement d'un flux partiel à partir du flux principal (7) à refroidir du deuxième étage de réaction (2), le rapport du flux volumique (7) d'acide chlorhydrique neutralisé au flux volumique du flux partiel (7') valant au moins 10:1 et, après la fin du refroidissement (8) du flux principal du deuxième étage, recyclage d'un autre flux partiel (9) plus grand du mélange réactionnel secondaire (18b) du deuxième étage (2) dans le premier étage de neutralisation (1) pour la réalisation de la réaction A),
C) introduction d'un autre flux partiel (10) provenant du mélange réactionnel secondaire (18b) du deuxième étage (2) dans une zone de neutralisation (17c) d'un troisième étage de neutralisation (3), réglage supplémentaire de la valeur du pH du mélange réactionnel tertiaire (18c) dans le troisième étage de neutralisation (3) à une valeur de pH dans la plage de pH 3 à pH 9 par addition de lessive alcaline (5') ou d'acide chlorhydrique (4') dans un autre circuit secondaire (11'), qui est raccordé à la zone de neutralisation (17c), ce circuit secondaire (11') étant constitué par un flux partiel plus petit du flux principal (11), sortant du troisième étage, du mélange réactionnel (17c), qui est introduit dans un refroidissement (12) et le flux partiel (13) plus grand du flux partiel (11) sortant du troisième étage étant acheminé, après la fin du refroidissement (12), vers un contrôle de qualité final de vérification de la température et de la valeur du pH et, dans le cas où ce flux refroidi (13) du mélange réactionnel tertiaire (18c) répond aux critères de qualité, ce flux (13) est prélevé en tant que flux produit (15) ou, dans le cas contraire, le mélange réactionnel tertiaire (18c) doit être introduit dans le troisième étage (3) en tant que flux de recyclage (16) pour un réglage supplémentaire du pH.

2. Procédé selon la revendication 1, **caractérisé en ce que** de la lessive de soude caustique, en particulier de la lessive de soude caustique présentant une teneur en NaOCl inférieure à 100 ppm, est utilisée comme agent de neutralisation (lessive alcaline).

3. Procédé selon la revendication 1 ou 2, **caractérisé en ce que** le temps de séjour moyen du mélange réactionnel primaire (18a) dans le premier étage de neutralisation (1) est de 20 s à 3 min.

4. Procédé selon l'une quelconque des revendications 1 à 3, **caractérisé en ce que** le temps de séjour moyen du mélange réactionnel secondaire (18b) dans le deuxième étage de neutralisation (2) est de 15 à 100 min.

5. Procédé selon l'une quelconque des revendications 1 à 4, **caractérisé en ce que** le temps de séjour moyen du mélange réactionnel tertiaire (18c) dans le troisième étage de neutralisation (3) est de 45 à 250 min.

6. Procédé selon l'une quelconque des revendications 1 à 5, **caractérisé en ce que**, indépendamment les unes des autres, la température du mélange réactionnel primaire (18a) à la sortie du premier étage (1) est réglée à une valeur dans la plage de 45°C à 80°C, de préférence de 65°C à 70°C, la température du mélange réactionnel secondaire (18b), qui est mesurée directement dans le deuxième étage de réaction (2), est réglée à une valeur dans la plage de 40°C à 75°C, de préférence de 60°C à 65°C et la température du troisième mélange réactionnel (18c) à la sortie du refroidissement du troisième étage (12) est réglée à une valeur dans la plage de 15°C à 55°C, de préférence de 25°C à 50°C.

7. Procédé selon l'une quelconque des revendications 1 à 6, **caractérisé en ce que** le mélange des flux de matières (4, 5, 9) dans le premier étage de neutralisation (1) a lieu dans un mélangeur statique, le mélangeur statique présentant une qualité de mélange d'au moins 98%, de préférence de 99%.

8. Procédé selon l'une quelconque des revendications 1 à 7, **caractérisé en ce qu'**un volume tampon pour la compensation de variations du flux volumique à l'entrée dans la plage de +/-20% est prévu dans la zone de neutralisation (17b) et dans la zone de neutralisation (17c).
